# EUROPEAN PATENT APPLICATION

(11) **EP 1 659 152 A1**
(43) Date of publication of application: **24.05.2006**
(21) Application number: 05256862.3
(22) Date of filing: 05.11.2005
(51) Int. Cl.: C08L 25/00

(54) **Composite material and method of manufacture thereof**

(30) Priority: 18.11.2004 GB 0425425
(71) Applicant: TecEnergy Enterprises Limited, Dublin 1 (IE)
(72) Inventor: LLoyd, Michael, Huddersfield HD3 3BJ (GB)
(74) Representative: Waller, Stephen

(57) **Abstract**

The composite tile 1 is formed from a mixture of 55% slate dust, 45% recycled pelletised polystyrene including between 2% and 5% HIPS by weight. The tile is manufactured by the process of weighing out the requiring proportions of slate dust, pelletised polystyrene and HIPS. A small amount of oil is then added to and mixed with the polystrene as a temporary binding agent, such that the surface of each pellet of polystyrene is coated with a thin film of oil. The slate dust is then added to the mixture and the mixture is agitated to form a homogeneous mixture of polystyrene and slate dust. The mixtures is then heated to melt the polystyrene and moulded in an injection moulding machine to form the composite tile.

## Description

The present invention relates to a composite material and a method of manufacture thereof and in particular to a slate composite roofing and cladding material and method of manufacture.

Slate is a metamorphic rock which cleaves readily along the line of sedimentation. This rock has traditionally been used to produce slate tiles used for roofing and cladding of buildings. Such tiles are usually referred to as roofing slates or simply slates. The roofing slates are cut from blocks of slate by cleavage and by sawing. The manufacture of traditional roofing slates is a time consuming and difficult process and large quantities of waste material, including large amounts of slate dust, are produced during the manufacturing process. Thus traditional roofing slates can be expensive when compared to alternative roofing materials, such as concrete tiles.

However, traditional roofing slates are popular for their attractive appearance and are often the only choice where restoration of an existing building is being undertaken or in areas where planning requirements dictate that new buildings must visually blend in with existing traditional constructions.

An alternative to natural slate that has been widely used in the past is imitation slate tiles formed from a compressed mixture of cement dust and asbestos. Such composite tiles are naturally a dull grey colour. In order to make the tiles look more like natural slate, at least one surface of the tile is coloured using a dye. Such dye is known to fade and the coloured surface can be worn off, revealing the non-coloured material therebeneath, once the tile becomes worn or damaged. Furthermore, since the colouration does not extend throughout the material, the non-coloured inner material is exposed when tile is cut during installation on a roof.

According to the present invention there is provided a composite material comprising slate dust and a polymeric material. Preferably the polymeric material comprises polystyrene, more preferably the material is formed from recycled pelletised polystyrene.

The composite material may further comprise a hardener such as high impact polystyrene (HIPS). The material may further comprise a fire retardant.

Preferably the material is shaped in the form of a tile, although it is envisaged that the material may be formed into any desired shape.

The relative proportions of the constituents of the composite material can vary depending on the required application for the material and the desired appearance. However, when producing tiles to simulate traditional roofing slates, a preferred mixture would be between 40% and 60% slate dust and between 40% and 60% polystyrene with up to 10% HIPS as a hardener, all proportions being by weight. In one embodiment the composite material comprises 45% polystyrene, including a small amount of HIPS and a fire retardant, and 55% slate dust. Such composition can be successfully used to make tiles having an approximate typical size of 300mm x 600mm x 4mm.

According to a second aspect of the present invention there is provided a roofing tile made from the composite material of the first aspect of the invention.

The roofing tile preferably is moulded to have a surface finish and a dressed edge shape simulating that of a traditional roofing slate. The tile may also be provided with apertures for the insertion of fasteners, such as nails, to secure the tile to a structure, such as a roof. Alternatively, one or both sides of the tile may be provided with indentations or recesses indicating the locations where nails should be forced through the tile to secure the tile to a structure, the thickness of the tile being reduced at such locations to assist the insertion of a nail therethough.

According to a further aspect of the present invention there is provided a method of manufacturing an article formed from a composite material comprising slate dust and a polymeric material, the method comprising the steps of admixing granulated, pelletised or particulate polymeric material with a temporary binding agent; admixing slate dust with the mixture of polymeric material and binding agent to form a homogeneous mixture; heating the mixture until the polymeric material melts; and moulding the mixture to form an article.

Preferably the step of admixing the polymeric material with the temporary binding agent comprises coating the surfaces of the polymeric material with the binding agent.

Preferably the binding agent comprises oil. Preferably the polymeric material is polystyrene.

In a preferred embodiment the mixture is moulded by injection moulding. Preferably the mixture is fed from a hopper into a screw conveyor of an injection moulding machine. Preferably the screw conveyor is heated to melt the polymeric material and the molten mixture is forced into a mould under pressure to form the desired article. Preferably the mould is chilled or cooled, for example by water cooling.

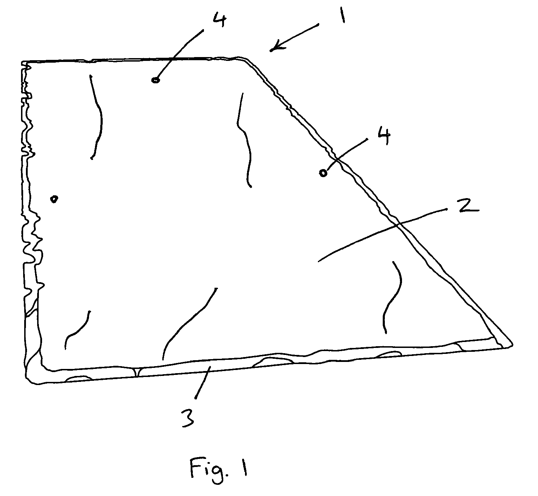

An embodiment of the present invention will now be described with reference to the accompanying drawing, in which:-
Fig. 1 shows a tile according to the present invention.

The composite tile 1 is formed from a mixture of 55% slate dust, 45% recycled pelletised polystyrene including between 2% and 5% HIPS by weight.

However, it is envisaged that other proportions of slate dust and polystyrene could be used depending on the application and colour requirements of the product. The colour of the finished product may also be varied by selecting the colour of the recycled polystyrene used.

Recycled polystyrene in the form of a re-pelletised product may be used, particularly from waste packaging, in order to produce an environmentally friendly and cost effective product.

The slate dust may be sourced as a waste product from slate mining and the source of the slate dust may be selected to vary the colour and appearance of the final product.

A fire retardant may also be added to the mixture, if desired, to reduce the flammability of the final product.

Tiles formed from the material and method of manufacture of the present invention have been tested and have been found to match or exceed the performance of natural slates in all tests.

The tiles have negligible water absorbtion and are resistant to acids. They can be readily nailed to a support structure using standard roofing nails, either manually or using a pneumatic nail gun and are readily cuttable with a standard disc cutter. The tile do not fade or deteriorate under UV radiation and are extremely weather resistant. Finally, the tile formed from the material and method of the present invention have a lower density and hence unit weight than equivalent natural roofing slates, reducing the overall strain placed upon the supporting structure.

The tile is manufactured by the process of weighing out the requiring proportions of slate dust, pelletised polystyrene and HIPS. A small amount of oil is then added to and mixed with the polystrene as a temporary binding agent, such that the surface of each pellet of polystyrene is coated with a thin film of oil. The slate dust is then added to the mixture and the mixture is agitated to form a homogeneous mixture of polystyrene and slate dust.

The mixture is then fed into a screw conveyor of an injection moulding machine wherein it is heated to approximately 200ºC to melt the polystyrene. The binding agent, in the form of oil, causes the slate duct to stick to the surface of each pellet of polystyrene such that the mixture does not separate as the mixture is transferred to the injection moulding machine and conveyed within the screw conveyor.

Once the mixture has melted the oil is no longer required and simply burns off due to the high temperature within the screw conveyor.

The molten mixture is then injected from the screw conveyor into a mould under a predetermined pressure. The mould is preferably chilled by water cooling to rapidly cool and set the mixture.

After a predetermined period of time the finished tile is removed from the mould and placed on a surface until the material has fully hardened.

The injection moulding machine used may be one conventional in the art and thus will not be described in great detail. However, at least the screw of the screw conveyor may be hardened to withstand the corrosive and abrasive nature of the slate dust and other components of the injection moulding machine may be modified, such as by replacing existing component by replacement parts formed from a more abrasion and corrosion resistant materials, to increase the life of the machine, which would otherwise be shortened due to the corrosive and abrasive nature of the slate dust.

As can be seen from Figure 1, the tile can be moulded with a surface finish 2 and dressed edge 3 to simulate that of a natural roofing slate. The tile is also moulded with indentations 4 to mark position where the tile should be nail to a support structure.

Because the slate dust is spread uniformly throughout the material of the tile, mainly achieved through to the use of a temporary binding agent during the manufacturing process, the colour of the material is uniform throughout and does not fade with age, unlike some prior art artificial tiles which have a surface coloured by dyes or pigments to resemble a natural slate.

Whilst the preferred embodiment describes the manufacture of a roofing tile, it is envisaged that the material and method of the present invention can be used to produce other moulded articles for use in the construction industry, such as cladding materials, natural effect stones, bricks or planks. Indeed, the material according to the present invention can be moulded into any desired shape that can be achieved using conventional injection moulding techniques and thus the material and method of the present invention can be used to produce a wide variety of articles and products, not limited to those applicable to the construction industry, but wherever an article having a surface finish resembling natural stone or having advantageous strength and wear characteristics is required.

## Claims

1. A composite material comprising slate dust and a polymeric material.

2. A composite material as claimed in claim 1, wherein the polymeric material comprises polystyrene.

3. A composite material as claimed in claim 2, wherein the material is formed from recycled pelletised polystyrene.

4. A composite material as claimed in any preceding claim, wherein the composite material further comprises a hardener.

5. A composite material as claimed in claim 4, wherein the hardener comprises high impact polystyrene (HIPS).

6. A composite material as claimed in any preceding claim, wherein the material further comprises a fire retardant.

7. A composite material as claimed in any preceding claim, wherein the material is shaped in the form of a tile.

8. A composite material as claimed in any preceding claim, wherein the material comprises between 40% and 60% slate dust and between 40% and 60% polystyrene, all proportions being by weight.

9. A roofing tile made from a composite material as claimed in any preceding claim.

10. A roofing tile as claimed in claim 9, wherein the tile is moulded to have a surface finish and a dressed edge shape simulating that of a traditional roofing slate.

11. A roofing tile as claimed in claim 9 or claim 10, wherein the tile is provided with apertures, recesses or indentations for the insertion of fasteners, such as nails, to secure the tile to a structure, such as a roof.

12. A method of manufacturing an article formed from a composite material comprising slate dust and a polymeric material, the method comprising the steps of admixing granulated, pelletised or particulate polymeric material with a temporary binding agent; admixing slate dust with the mixture of polymeric material and binding agent to form a homogeneous mixture; heating the mixture until the polymeric material melts; and moulding the mixture to form an article.

13. A method as claimed in claim 12, wherein the step of admixing the polymeric material with the temporary binding agent comprises coating the surfaces of the polymeric material with the binding agent.

14. A method as claimed in 12 or claim 13, wherein the temporary binding agent comprises oil.

15. A method as claimed in any of claims 12 to 14, wherein the polymeric material is polystyrene.

16. A method as claimed in any one of claims 12 to 15, wherein the article is moulded by injection moulding.

17. A method as claimed in claim 15, wherein the mixture is fed from a hopper into a screw conveyor of an injection moulding machine.

18. A method as claimed in claim 17, wherein the screw conveyor is heated to melt the polymeric material and the molten mixture is forced into a mould under pressure to form the desired article.

19. A method as claimed in claim 18, wherein the mould is chilled or cooled, for example by water cooling.
